# EUROPÄISCHE PATENTSCHRIFT

(11) **EP 2 483 086 B1**
(45) Veröffentlichungstag und Bekanntmachung des Hinweises auf die Patenterteilung: **15.05.2013**
(21) Anmeldenummer: 10752779.8
(22) Anmeldetag: 06.09.2010
(51) Int. Cl.: B60C 11/04, B60C 11/13

(54) **LAUFSTREIFENPROFIL EINES FAHRZEUGREIFENS**
TREAD PROFILE OF A VEHICLE TIRE
PROFIL DE BANDE DE ROULEMENT D'UN PNEUMATIQUE DE VÉHICULE

(30) Priorität: 29.09.2009 DE 102009044123
(43) Veröffentlichungstag der Anmeldung: 08.08.2012
(73) Patentinhaber: Continental Reifen Deutschland GmbH, 30165 Hannover (DE)
(72) Erfinder: XU, Qiao, 30419 Hannover (DE)
(74) Vertreter: Finger, Karsten
(86) Internationale Anmeldenummer: PCT/EP2010/063018
(87) Internationale Veröffentlichungsnummer: WO 2011/039030

(56) Entgegenhaltungen:
- WO-A1-98/03357
- GB-A- 2 363 100
- JP-A- 2002 264 614

## Beschreibung

Die Erfindung betrifft ein Laufstreifenprofil eines Fahrzeugreifens - insbesondere Fahrzeugluftreifens - mit radial erhabenen durch Rillen von einander beabstandeten Profilelementen, wobei die Rillen in radialer Richtung nach innen durch ihren Rillengrund und beiderseits des Rillengrundes jeweils durch eine Rillenwand, die sich in radialer Richtung R aus dem Rillengrund nach außen bis zu der die Bodenkontaktoberfläche bildenden Mantelfläche erstreckt, begrenzt sind, wobei wenigstens eine Rille über den Umfang des Fahrzeugreifens erstreckt ausgebildet ist, bei der zumindest in einer Rillenwand über den Umfang verteilt und beabstandet zu einander jeweils in radialer Richtung R ausgehend vom Rillengrund nach radial außen erstreckte, in Richtung senkrecht zur Rillenwand in die Rille hinein erstreckte Erhebungen der Rillenwand ausgebildet sind.

Derartige Fahrzeugluftreifen sind bekannt. Es ist bekannt, Umfangsrillen von Fahrzeugluftreifen für Nutzfahrzeuge mit pyramidenförmigen Erhebungen der Seitenwand auszubilden, die als Steinabweiser dienen. Die wechselseitigen pyramidenförmigen Anordnungen ermöglichen dabei, das Eindringen von größeren Steinen ins Innere der Rille zu behindern und ein Festsetzen von Steinen zu erschweren. Hierdurch kann der bei Nutzfahrzeugen das Fangen von Steinen in den Rillen der Reifen erschwert und die Gefahr des späteren unkontrollierten Herausschleuderns der Steine aus dem Laufstreifenprofil reduziert werden.

Der Rillengrund selbst ist hierdurch jedoch nicht gegen eine Penetration von eventuelle dennoch in das Laufstreifenprofil eingedrungenen, insbesondere kleineren Steinen und Fremdkörpern geschützt. Im Bereich der pyramidenförmigen Erhebungen der Rillenwand erfolgt die Krafteinleitung aus der Rillenwand zum Rillenboden an der aus Erhebung der Rillenwand und Rillenboden gebildeten Übergangskante, wodurch hohe Druckspitzen gerade im Übergangsbereich zwischen den Erhebungen der Rillenwand und dem Rillengrund entstehen. Die Kraftübertragung in axialer Richtung A über das Laufstreifenprofil hinweg kann durch die hierdurch erzeugten Druckspitzen im Bereich des Übergangs zwischen Erhebungen der Rillenwand und Rillengrund zur Rissbildung im Rillengrund führen.

Aus der WO 98/03357 Al, aus der JP 2002 264614 A sowie aus der GB 2 363 100 A ist jeweils ein derartiges Laufstreifenprofil eines Fahrzeugluftreifens bekannt, bei welchem sich jeweils ausgehend von einer Erhebung der einen Rillenwand im Rillengrund eine stegförmige Erhebung des Rillengrundes ausgebildet ist, die sich quer zur Erstreckungsrichtung des Rillengrundes bis zur anderen Rillenwand erstreckt und die andere Rillenwand im radial inneren Erstreckungsbereich der Rille an die in der einen Rillenwand ausgebildete Erhebung anbindet.

Der Erfindung liegt die Aufgabe zugrunde in einfacher Weise ein derartiges Laufstreifenprofil mit verbesserter Haltbarkeit zu schaffen.

Erfindungsgemäß wird die Aufgabe durch Ausbildung eines Laufstreifenprofils eines Fahrzeugreifens - insbesondere Fahrzeugluftreifens - mit radial erhabenen durch Rillen von einander beabstandeten Profilelementen, wobei die Rillen in radialer Richtung nach innen durch ihren Rillengrund und beiderseits des Rillengrundes jeweils durch eine Rillenwand, die sich in radialer Richtung aus dem Rillengrund nach außen bis zu der die Bodenkontaktoberfläche bildenden Mantelfläche erstreckt, begrenzt sind, wobei wenigstens eine Rille über den Umfang des Fahrzeugreifens erstreckt ausgebildet ist, bei der zumindest in einer Rillenwand über den Umfang verteilt und beabstandet zu einander jeweils in radialer Richtung R ausgehend vom Rillengrund nach radial außen erstreckte, in Richtung senkrecht zur Rillenwand in die Rille hinein erstreckte Erhebungen der Rillenwand ausgebildet sind, bei dem jeweils ausgehend von einer Erhebung der einen Rillenwand im Rillengrund wenigstens eine stegförmige Erhebung des Rillengrundes ausgebildet ist, die sich quer zur Erstreckungsrichtung des Rillengrundes bis zur anderen Rillenwand erstreckt und die andere Rillenwand im radial inneren Erstreckungsbereich der Rille an die in der einen Rillenwand ausgebildete Erhebung anbindet, gemäß den Merkmalen von Anspruch 1 gelöst, wobei die Erhebung der Rillenwand eine pyramidenähnliche Form - insbesondere die Form eines Tetraeders oder einer Pyramide mit viereckiger oder fünfeckiger Grundfläche - aufweist, bei der die Grundfläche der pyramidenähnlichen Form im Rillengrund und die Spitze (S) der pyramidenähnlichen Form in der Rillenwand ausgebildet ist, und bei der eine Seitenfläche der pyramidenähnlichen Form Teil der Rillenwand ist und die anderen Seitenflächen der pyramidenähnlichen Form die zur Rille hin die Erhebung begrenzenden Flächen bilden.

Die Ausbildung bewirkt, dass eine Kraftableitung aus der Rillenwand über die Erhebung der Rillenwand mit Hilfe der stegförmigen Versteifung direkt in die gegenüberliegende Rillenwand erfolgt und in das durch diese Rillenwand begrenzte Profilelement abgeleitet wird. Die Kraftableitung erfolgt sowohl über den durch den Steg versteiften Bereich des Rillenbodens selbst als auch über den Steg oberhalb des Rillenbodens. Die im Bereich der Erhebung der Rillenwand in Richtung Rillengrund gerichtete Kraft wird sowohl über den Steg in Richtung des benachbarten Profilelementes gezielt umgeleitet als auch im unteren Rillenbereich auf Steg und Rillengrund verteilt. Dies ermöglicht eine vergleichmäßigte Kraftverteilung und gezielte Kraftableitung im Profil. Die Gefahr der Rissbildung im Rillengrund wird reduziert, die Haltbarkeit des Reifens kann hierdurch erhöht werden. Zusätzlich wird die Gefahr des Eindringens von Fremdkörpern in den Rillenboden reduziert, wodurch die Haltbarkeit weiter erhöht werden kann. Die hohe Haltbarkeit des Rillengrundes verbessert zusätzlich die Runderneuerbarkeit.

Besonders vorteilhaft ist die Ausbildung eines Laufstreifenprofils gemäß den Merkmalen von Anspruch **2,** wobei die stegförmige Erhebung des Rillengrundes sich ausgehend von einer außerhalb der Rillenwand in der Rille ausgebildeten Ecke der Grundfläche der pyramidenähnlichen Form der Erhebung der Rillenwand bis zur anderen Rillenwand erstreckt. Hierdurch wird der für Rissbildung besonders empfindliche Bereich der Ecke zuverlässig geschützt.

Besonders vorteilhaft ist die Ausbildung eines Laufstreifenprofils gemäß den Merkmalen von Anspruch **3**, wobei die stegförmige Erhebung des Rillengrundes sich ausgehend von einer der anderen Seitenflächen, die die Erhebung der Rillenwand zur Rille hin begrenzen, bis zur anderen Rillenwand erstreckt.

Besonders vorteilhaft ist die Ausbildung eines Laufstreifenprofils gemäß den Merkmalen von Anspruch **4,** wobei von zwei anderen Seitenflächen, die die Erhebung zur Rille hin begrenzen, jeweils eine stegförmige Erhebung des Rillengrundes bis zur anderen Rillenwand erstreckt ausgebildet sind. Dies ermöglicht eine zusätzliche Versteifung gegen Torsion der Erhebung der Rillenwand um die Radiale im Bereich des Rillengrundes und erhöht den Schutz gegen hierdurch bedingte Rissbildungen.

**Die Aufgabe wird erfindungsgemäß auch durch** die Ausbildung eines Laufstreifenprofils gemäß den Merkmalen von Anspruch **5 gelöst**, wobei die Erhebung der Rillenwand eine kegelsegmentähnliche Form aufweist, bei der die Grundfläche des Kegelsegments im Rillengrund ausgebildet ist.

Besonders vorteilhaft ist die Ausbildung eines Laufstreifenprofils gemäß den Merkmalen von Anspruch **6**, wobei die stegförmige Erhebung in ihrer Erstreckung durch die Rille geradlinig verlaufend unter Einschluss eines Winkels α zur Erstreckungsrichtung der Rille mit 45°≤ α≤ 135° ausgebildet ist. Hierdurch kann eine zuverlässige Krafteinleitung und Kraftverteilung gewährleistet werden.

Besonders vorteilhaft ist die Ausbildung eines Laufstreifenprofils gemäß den Merkmalen von Anspruch 7, wobei der Steg mit einer Stegbreite b mit (0,1c)≤b≤5 (0,5c) ausgebildet ist, wobei c das Maß der maximalen Längenerstreckung der Erhebung der Rillenwand, in Erstreckungsrichtung der Rille gemessen im Rillengrund darstellt. Hierdurch kann besonders einfach und zuverlässig die Versteifung sichergestellt werden ohne negative Beeinflussung sonstiger Reifeneigenschaften wie Stonetrapping, Handling, Traktion und Aquaplaningeigenschaften.

Besonders vorteilhaft ist die Ausbildung eines Laufstreifenprofils gemäß den Merkmalen von Anspruch **8**, wobei der Steg mit einer in radialer Richtung R aus dem Rillengrund gemessenen Steghöhe h mit (0,05 P_{T}) ≤ h ≤ (0,5 P_{T}) ausgebildet ist, wobei P_{T} das Maß der in radialer Richtung gemessenen maximalen Profiltiefe der Rille darstellt. Hierdurch kann besonders einfach und zuverlässig die Versteifung sichergestellt werden ohne negative Beeinflussung sonstiger Reifeneigenschaften wie Stonetrapping, Handling, Traktion und Aquaplaningeigenschaften.

Besonders vorteilhaft ist die Ausbildung eines Laufstreifenprofils gemäß den Merkmalen von Anspruch **9,** bei der die den Steg nach radial außen begrenzende Kontur über die Rille hinweg geradlinig ausgebildet ist, bei der der Übergang zwischen der die den Steg nach radial außen begrenzende Kontur und der Erhebung der Rillenwand mit einem Krümmungsradius R_{K} um einen auf der von Steg und Erhebung der Rillenwand zur Rille hinweisenden Seite liegenden Krümmungsmittelpunkt M mit R_{K} ≤ h abgerundet gekrümmt ausgebildet ist. Hierdurch kann die Gefahr der Rissbildung weiter reduziert werden.

Die Erfindung wird im Folgenden an Hand der in den Figuren 1 bis 11 dargestellten Ausführungsbeispiele näher erläutert. Darin zeigen
- Fig. 1: Draufsicht auf den Umfangsabschnitt des Laufstreifenprofils eines Fahrzeugluftreifens für Nutzfahrzeuge,
- Fig. 2: Vergrößerter Ausschnitt des Details II-II des Laufstreifenprofils von Fig. 1,
- Fig. 3: Laufstreifenprofil der Figuren 1 und 2 in Schnittdarstellung gemäß Schnitt III-III von Fig.2,
- Fig. 4: Laufstreifenprofil der Figuren 1 und 2 in Schnittdarstellung gemäß Schnitt IV-IV von Fig.2,
- Fig. 5: Laufstreifenprofil von Fig. 1 und Fig.2 in Schnittdarstellung gemäß Schnitt V-V von Fig.2,
- Fig. 6: Draufsicht auf den Umfangsabschnitt eines Laufstreifenprofils in alternativer Ausführung,
- Fig. 7: Vergrößerter Ausschnitt des Details VII-VII des Laufstreifenprofils von Fig.6,
- Fig. 8: Laufstreifenprofil der Figuren 6 und 7 in Schnittdarstellung gemäß Schnitt VIII-VIII von Fig.7
- Fig. 9: Querschnitt durch die Umfangsrille von Fig. 7 gemäß Schnitt IX-IX von Fig.7 zur Erläuterung des Übergangs zwischen stegförmiger Erhebung und Erhebung der Rillenwand,
- Fig. 10: Draufsicht auf eine Umfangsrille des Laufstreifenprofils in vergrößerter Form mit weiterer alternativer Ausbildung und
- Fig. 11: Schnittdarstellung durch die Umfangsrille von Fig. 10 gemäß Schnitt XI-XI von Fig.10.

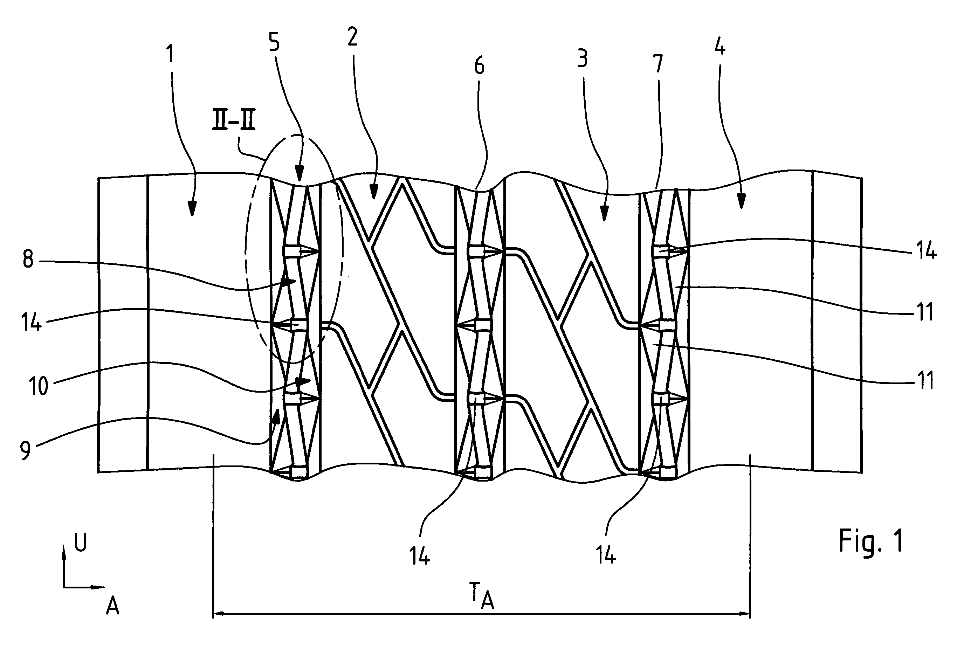

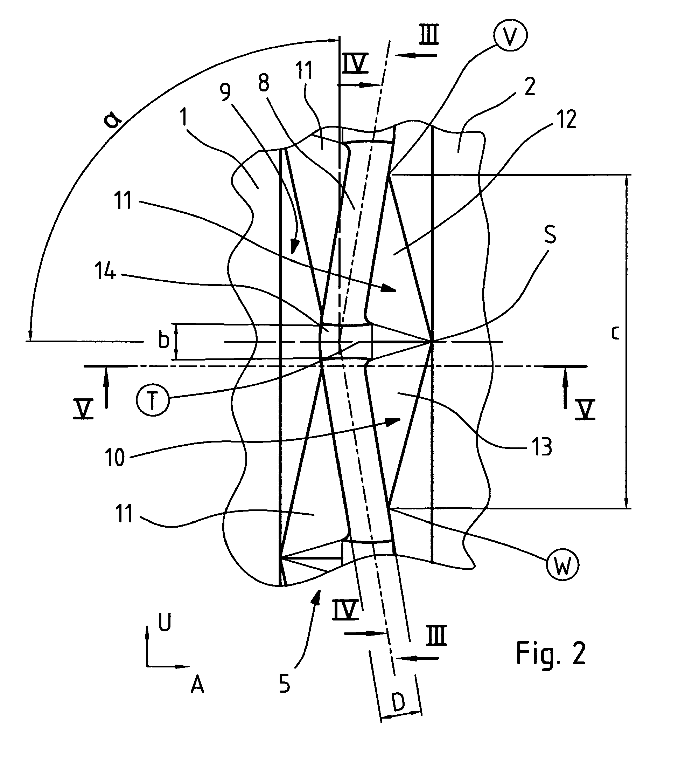

Die Figuren 1 bis 5 zeigen ein Laufstreifenprofil eines Fahrzeugluftreifens für Nutzfahrzeugreifen mit in axialer Richtung A des Fahrzeugluftreifens nebeneinander angeordneten, jeweils über den gesamten Umfang des Fahrzeugluftreifens erstreckten und in Umfangsrichtung U ausgerichteten Umfangsrippen 1, 2, 3 und 4. Die Umfangsrippen 1 und 2 sind durch eine Umfangsrille 5, die Umfangsrippen 2 und 3 durch eine Umfangsrille 6 und die Umfangsrippen 3 und 4 durch eine Umfangsrille 7 jeweils in bekannter Weise in axialer Richtung A voneinander beabstandet. Die Umfangsrillen 5, 6 und 7 erstrecken sich über den gesamten Umfang des Fahrzeugluftreifens und sind in Umfangsrichtung U ausgerichtet. Wie in Figur 1 zu erkennen ist, sind die Umfangsrippen 1 und 4 jeweils als Schulterrippen ausgebildet. Die Bodenaufstandsfläche des Fahrzeugluftreifens erstreckt sich über eine axiale Breite T_{A} aus dem Erstreckungsbereich der Umfangsrippe 1 bis in den Erstreckungsbereich der Umfangrippe 4 hinein.

Die Umfangsrillen 5, 6 und 7 sind jeweils in gleicher Weise ausgebildet. Die weitere Beschreibung beschränkt sich daher der Einfachheit halber lediglich auf die Ausbildung der Umfangsrille 5.

Die Umfangsrille 5 ist in radialer Richtung R nach innen mit einem über den gesamten Umfang des Fahrzeugluftreifens erstreckten Rillengrund 8 und zur Umfangsrippe 1 mit einer Rillenwand 9 und zur Umfangsrippe 2 mit einer Rillenwand 10 begrenzt, wobei die Rillenwand 9 jeweils die zur Umfangsrille 5 weisende Flanke der Umfangsrippe 1 und die Rillenwand 10 die zur Umfangsrille 5 weisende Flanke der Umfangsrippe 2 bildet. Die Rillenwand 9 erstreckt sich in radialer Richtung R aus dem Rillengrund 8 nach außen bis zu der die Umfangsrippe 1 nach radial außen begrenzenden, die Bodenaufstandsfläche bildenden Mantelfläche. Die Rillenwand 10 erstreckt sich in radialer Richtung R ausgehend vom Rillengrund 8 nach außen bis zu der die Umfangrippe 2 nach radial außen begrenzenden, die Bodenaufstandsfläche bildenden Mantelfläche.

Die Umfangsrille 5 ist mit einer Profiltiefe P_{T} ausgebildet, welche den maximalen radialen Abstand des Rillengrundes 8 zu der die Bodenkontaktoberfläche bildenden Mantelfläche darstellt. Die Rillenwand 9 schneidet die die Umfangsrippe 1 nach radial außen begrenzende Mantelfläche in einer geradlinigen über den gesamten Umfang des Fahrzeugluftreifens erstreckten Schnittlinie. Die Rillenwand 10 schneidet die die Umfangsrippe 2 nach radial außen begrenzende Mantelfläche in einer geradlinigen über den gesamten Umfang des Fahrzeugluftreifens erstreckten Schnittlinie. Die Umfangsrille 5 ist im Bereich der radial äußeren Mantelfläche über den gesamten Umfang mit einer Rillenbreite B ausgebildet, welche den Abstand der beiden geradlinigen Schnittlinien aus Rillenwand 9 und radial äußerer die Umfangsrippe 1 begrenzenden Mantelfläche und aus Rillenwand 10 und radial äußerer die Umfangsrippe 2 begrenzenden Mantelfläche darstellt.

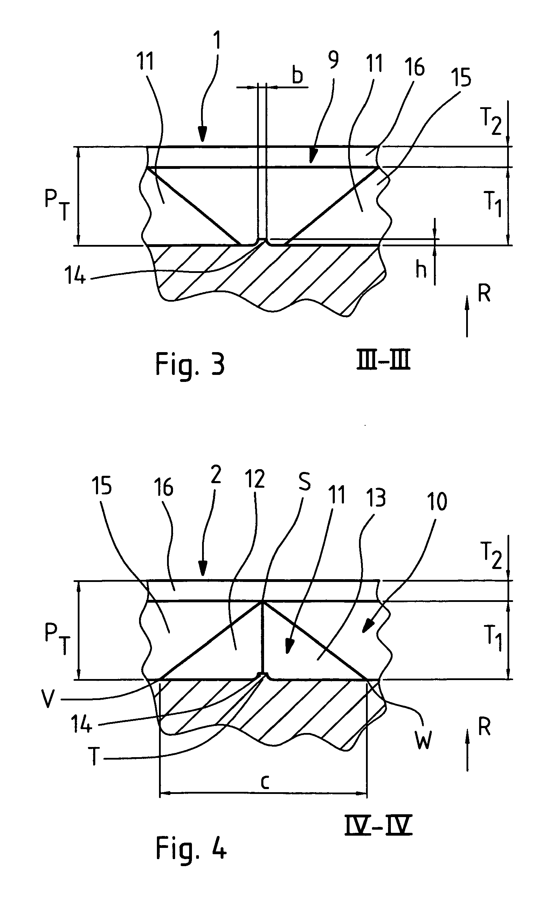

Wie in den Figuren 3 bis 5 zu erkennen ist, sind die Rillenwände 9 und 10 jeweils mit einem radial inneren Erstreckungsbereich 15, welcher sich ausgehend vom Rillengrund 8 nach radial außen über eine radiale Erstreckungshöhe T₁ erstreckt, und einem in radialer Richtung R daran anschließenden radial äußeren Erstreckungsbereich 16, welcher sich über eine radiale Erstreckungshöhe T₂ bis zu der die Umfangsrippe 1 bzw. die Umfangsrippe 2 nach radial außen begrenzenden Mantelfläche erstreckt, ausgebildet. Dabei ist T₁ mit T₁ ≥ (0,5 P_{T}) ausgebildet. In der konkret dargestellten Ausführung ist T₁ mit T₁ =(0,75P_{T}) ausgebildet.

Der radial äußere Erstreckungsbereich 16 ist im dargestellten Ausführungsbeispiel eben und geradlinig über den gesamten Umfang des Fahrzeugluftreifens verlaufend ausgebildet. Im radial inneren Erstreckungsbereich 15 der Rillenwand 9 sind jeweils über den Umfang des Fahrzeugluftreifens verteilt eine Vielzahl von Erhebungen 11 ausgebildet. Im radial inneren Erstreckungsbereich 15 der Rillenwand 10 sind in gleicher Weise ebenfalls über den Umfang des Fahrzeugluftreifens verteilt eine Vielzahl derartiger Erhebungen 11 ausgebildet, wobei die Erhebungen 11 der Rillenwand 9 und die Erhebungen 11 der Rillenwand 10 in Umfangsrichtung U des Fahrzeugluftreifens zueinander derartig versetzt angeordnet sind, dass jeweils zwischen zwei Erhebungen 11 der Rillenwand 9 eine Erhebung 11 der Rillenwand 10 und jeweils zwischen zwei Erhebungen 11 der Rillenwand 10 eine Erhebung 11 der Rillenwand 9 ausgebildet ist. Die Erhebungen 11 der Rillenwand 9 und die Erhebungen 11 der Rillenwand 10 sind in gleicher Weise bezüglich der jeweils zugehörigen Rillenwand 9 bzw. 10 ausgebildet und werden im Folgenden daher zur Vereinfachung lediglich im Zusammenhang mit einer Erhebung 11 der Rillenwand 10 näher erläutert.

Die Erhebung 11 erstreckt sich aus der ansonsten geradlinigen über den Umfang des Fahrzeugluftreifens erstreckten Rillenwand 10 in die Umfangsrille 5 hinein. Die Erhebung 11 erstreckt sich in Umfangsrichtung U dabei im Rillengrund 8 über eine maximale Erstreckung c. In der ansonsten ebenen Fläche des radial inneren Erstreckungsbereichs 15 der Rillenwand 10 bildet die Erhebung 11 der Rillenwand 10 mit ihren zur Umfangsrille 5 hin gerichteten Oberflächen zwei dreieckige Seitenfläche 12 und 13. Die dreieckige Seitenfläche 12 ist mit den Dreieckspunkten V, T und S die dreieckige Seitenfläche 13 mit den Dreieckspunkten T, W und S ausgebildet. Die Dreieckspunkte V und W und T liegen jeweils im Rillengrund 8. Die Dreieckspunkte V, W und S liegen jeweils in der Rillenwand 5. Die dreieckige Seitenfläche 12 mit den Dreieckspunkten V, T und S sowie die dreieckige Seitenfläche 13 mit den Dreieckspunkten T, W und F beschreiben somit zwei Seitenflächen eines Tetraeders, dessen Grundfläche zwischen den Dreieckspunkten V, T und W im Rillengrund 8 und dessen dritte Seitenfläche zwischen den in der Rillenwand 15 gebildeten Dreieckspunkten V, S und W ausgebildet ist. Der Punkt S bildet die Spitze des Tedraeders. Der radial innere Erstreckungsbereich 15 der Rillenwand 10 erstreckt sich jeweils über das radiale Erstreckungsmaß T₁ ausgehend vom Rillengrund 8 bis zur radialen Position der Spitze S des Tetraeders.

Die Erhebungen 11 der Rillenwand 10 und die Erhebungen 11 der Rillenwand 9 sind dabei derart wechselweise angeordnet, dass der zwischen Ihnen verbleibende ebene Rillengrund 8 längs seiner durch die Erhebungen 11 bedingten zickzackförmigen Erstreckung mit einer senkrecht zu seiner Erstreckungsverlauf jeweils gemessenen Breite D ausgebildet ist mit (1/4B) ≤ D ≤ (1/2B). Im konkret dargestellten Ausführungsbeispiel ist D = (0,3 B) gewählt.

Ausgehend von der zwischen den Punkten S und T gebildeten Schnittkante der beiden Dreiecke 12 und 13 ist im Rillengrund 8 jeweils eine radiale stegförmige Erhöhung 14 der radialen Erstreckungshöhe h - gemessen in radialer Richtung R nach außen ausgehend vom Rillengrund 8 - ausgebildet, welcher sich unter Einschluss eines Winkels α mit 45° ≤ α ≤ 135° zur Umfangsrichtung U des Reifens und somit quer zur Erstreckungsrichtung des Rillengrundes 8 verlaufend über den Rillengrund 8 bis zur der Rillenwand 9 erstreckt und in dieser zwischen zwei in Umfangsrichtung U benachbarten Erhebungen 11 der Rillenwand 9 mündet. Die stegförmige Erhöhung 14 bindet dabei die Erhebung 11 der Rillenwand 10 an die Rillenwand 9 an.

In analoger Weise erstreckt sich jeweils eine stegförmige Erhebung 14 zwischen jeweils einer Erhebung 11 der Rillenwand 9 und einem erhebungsfreien Abschnitt der Rillenwand 10 und binden die jeweilige Erhebung 11 der Rillenwand 9 über den Rillengrund 8 hinweg an die Rillenwand 10 an.

Im dargestellten Ausführungsbeispiel ist α = 90° gewählt.

Die stegförmigen Anhebungen 14 sind jeweils in an ihrer radial nach außen weisenden Oberfläche eben mit einer Stegbreite b ausgebildet mit (0,1 c) ≤ b (0,5 c). Im dargestellten Ausführungsbeispiel ist b mit b = (0,15 c) ausgebildet.

Die in radialer Richtung R des Reifens gemessene Erstreckungshöhe h der stegförmigen Erhebung 14 ist mit (0,05 P_{T} ) ≤ h ≤ (0,5 P_{T}) ausgebildet. Im dargestellten Ausführungsbeispiel ist P_{T} = 14mm und h = 1mm ausgebildet.

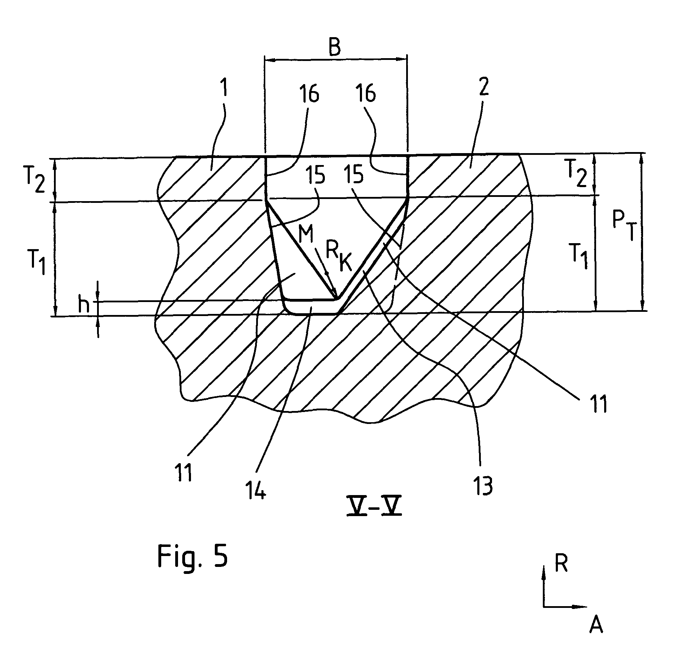

Wie in Fig. 5 zu erkennen ist, ist die stegförmige Erhebung 14 an ihrer radial äußeren Oberfläche über die Erstreckung des Steges 14 über den Rillengrund 9 hinweg geradlinig ausgebildet. Der Übergang zur Erhebung 11 erfolgt abgerundet mit einem Krümmungsradius R_{K} um einen Krümmungsmittelpunkt M, der an der von der stegförmigen Erhebung 14 und der Erhebung 11 wegweisenden zur Rille 5 hinweisenden Seite angeordnet ist. Auf diese Weise ist ein fließender Übergang zwischen der radial äußeren Oberfläche des Steges 14 und der Erhebung 11 ausgebildet. Der Krümmungsradius R_{K} ist dabei mit R_{K} ≤ h zur Erzielung des abgerundeten Übergangs ausgebildet.

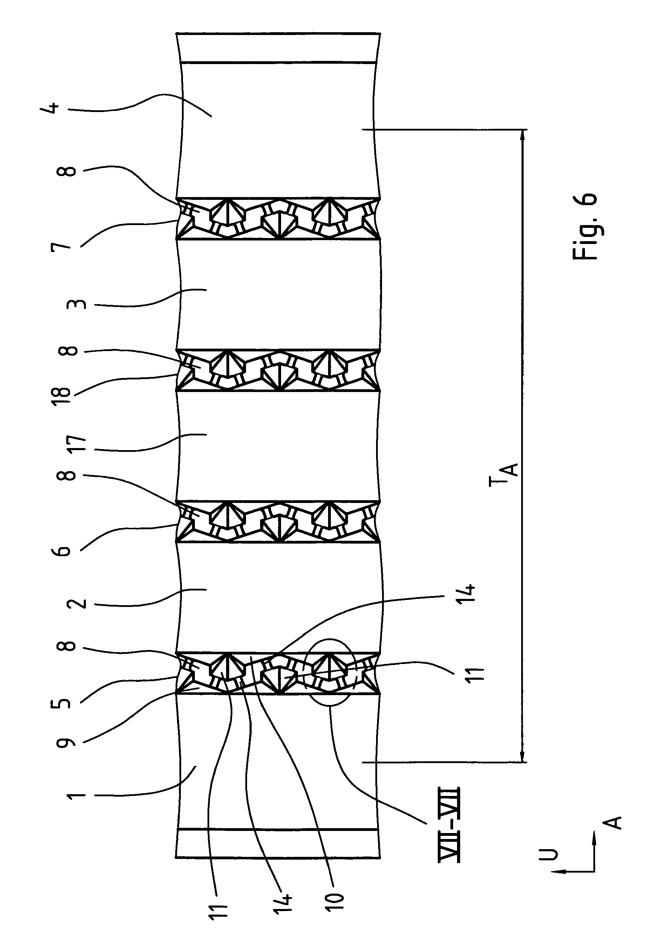

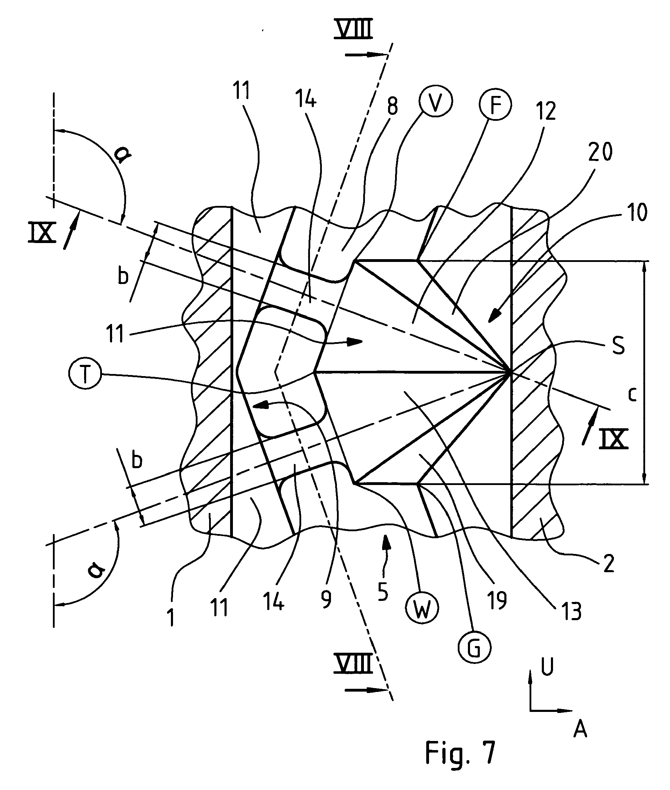

Die Figuren 6 bis 9 zeigen eine alternative Ausbildung der Erhebung 11 der Rillenwände 9 und 10. Wie in den Figuren 7 bis 9 am Beispiel einer Erhebung 11 der Rillenwand 10 zu erkennen ist, bildet die Erhebung 11 in dieser Ausführung eine pyramidenähnliche Form mit einer fünfeckigen Grundfläche der Pyramide, wobei die fünfeckige Grundfläche aus den Punkten F, G, W, T und V gebildet ist und die Spitze der Pyramide mit S bezeichnet ist. Die Punkte F, G und S liegen in der Rillenwand 10. Die Punkte F, G, W, T, V der Grundfläche liegen jeweils im Rillengrund 8 der Umfangsrille 5, wobei die Punkte W, T und V auf der von der jeweiligen Rillenwand 10 zur gegenüberliegenden Rillenwand 9 weisenden Seite im Rillengrund 8 liegen.

Wie der Fig. 6 und der Fig. 7 zu entnehmen ist, bilden die Punkte G, S und F eine in der Rillenwand 10 liegende dreiecksförmige Seitenfläche der Pyramide. Die Punkte G, W und S bilden eine an die Rillenwand 10 anschließende dreiecksförmige Seitenfläche 19 der Pyramide. Die Punkte W, T und S bilden eine weitere an die Seitenfläche 19 anschließende dreiecksförmige Seitenfläche 13 der Pyramide. Die Punkte T, F, S bilden eine an die Seitenfläche 13 anschließende dreiecksförmige Seitenfläche 12 der Pyramide. Die Punkte V, F und S bilden die letzte, an die Seitenfläche 12 und an die Rillenwand 10 anschließende dreiecksförmige Seitenfläche 20 der Pyramide. Der Punkt T ist der am weitesten von der Rillenwand 10 entfernt liegende Punkt der Pyramide. Der Punkt S bildet die Spitze der Pyramide.

Wie in den Figuren 6 bis 9 zu erkennen ist, ist bei dieser Ausführung jeweils sowohl von der Mitte der aus den Punkten T und V gebildeten Seitenkante der dreieckigen Seitenfläche 12 als auch von der Mitte der aus den Punkten T und W gebildeten Seitenkante der dreieckigen Seitenfläche 13 ausgehend jeweils eine stegförmige radiale Erhebung 14 im Rillengrund 8 ausgebildet, die sich bis zur gegenüberliegenden Seitenwand 9 hindurch erstreckt und somit die Erhebung 11 der Rillenwand 10 an der Rillenwand 9 im radial inneren Erstreckungsbereich der Umfangsrille 5 anbindet. Die stegförmige Erhebung 14 ist auch in dieser Ausführung mit der Breite b und mit der Höhe h ausgebildet. Die maximale Erstreckung c der radialen Erhebung ist in dieser dargestellten Ausführung in der Rillenwand 10 zwischen den Punkten G und F der Erhebung 11 ausgebildet. Die Definitionen zur Bemessung der Höhe h und der Breite b des stegförmigen Erhebungen 14 entsprechen den im Zusammenhang mit der Ausführung zu den Figuren 1 bis 5 erläuterten Angaben und Bemessungen.

Die Figuren 6 bis 8 zeigen darüber hinaus ein Ausführungsbeispiel, bei dem der Winkel α = 110° gewählt ist.

Die Figuren 6 bis 8 zeigen ein weiteres Ausführungsbeispiel, bei dem die Erstreckungsrichtung der stegförmigen Erhebung 14 jeweils senkrecht zur Seitenkante der Seitenfläche 12 bzw. 13 ausgerichtet ist.

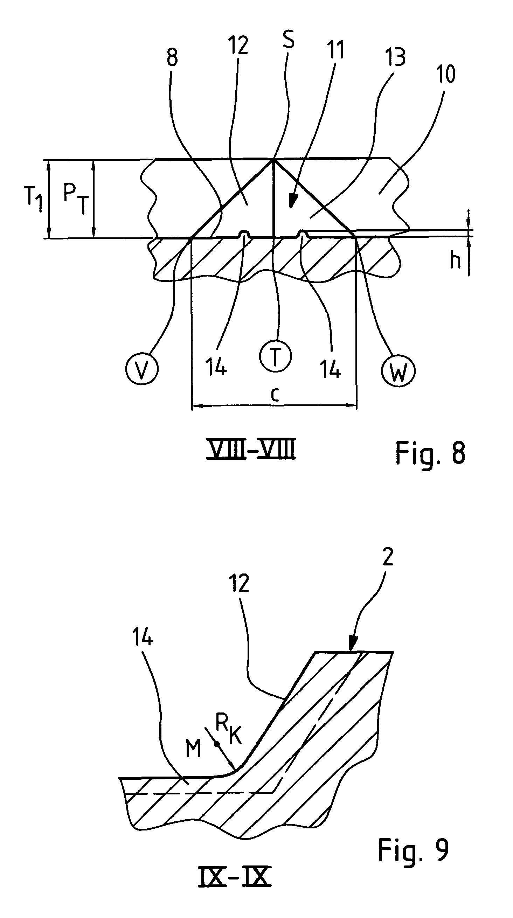

Die Figuren 6 bis 9 zeigen ein weiteres Ausführungsbeispiel, bei dem - wie in den Figuren 8 und 9 zu erkennen ist - die Rillenwand 10 mit einer radiale Erstreckungshöhe T₁ = P_{T} und mit T₂ = 0 und somit nur aus einem einzigen radialen Erstreckungsbereich ausgebildet ist und bei dem die Spitze S in der Rillenwand 10 an der Schnittkante zwischen Rillenwand 10 und der die Umfangsrippe 2 nach radial außen begrenzenden Oberfläche ausgebildet ist.

Fig. 6 zeigt darüber hinaus ein weiteres Ausführungsbeispiel des Laufstreifenprofils mit fünf in axialer Richtung A benachbarten Umfangsrippen 1, 2, 17, 3 und 4 und mit vier Umfangsrillen 5, 6, 18 und 7.

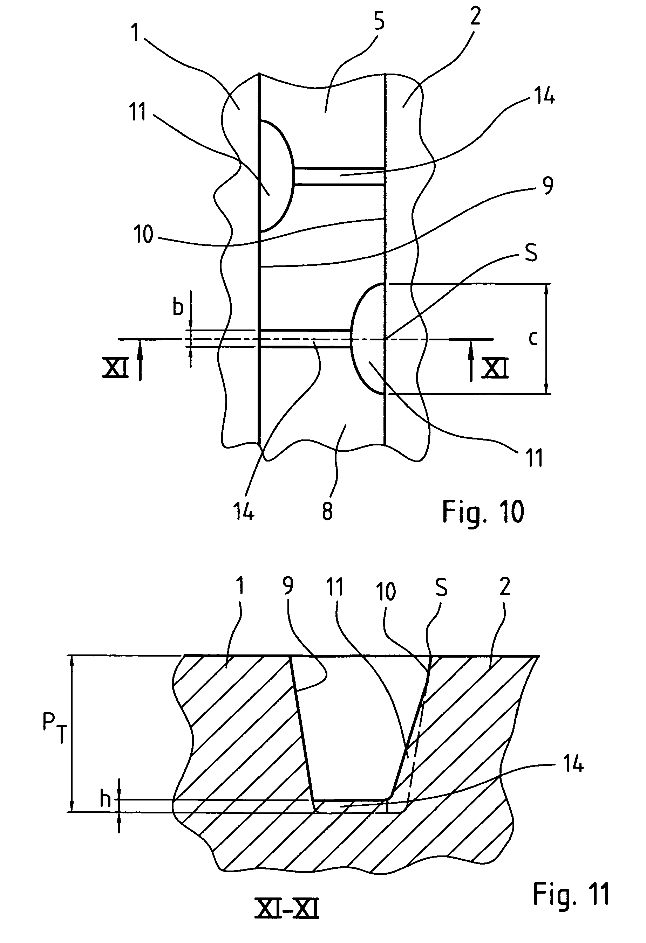

Fig. 10 und Fig.1 zeigen ein weiteres Ausführungsbeispiel, bei welchem die Erhebungen 11 jeweils eine im Rillengrund 8 der Umfangsrille 5 ausgebildete kreissegmentförmige Schnittkontur mit dem Rillengrund 8 aufweisen, die die Grundfläche eines Kegelsegmentes mit der Kegelspitze S bildet, wobei die Kegelspitze S jeweils in der zugehörigen Rillenwand 10 bzw. 9 liegt und die Erhebung 11 nach radial außen begrenzt. Auch in dieser Ausführung ist jeweils eine stegförmige Erhebung 14 ausgebildet, die sich aus dem Rillengrund 8 in radialer Richtung mit der Steghöhe h der Breite b erstreckt und sich von der jeweiligen Erhebung 11 der Rillenwand 10 bzw. 9 durch die Umfangsrille 5 hindurch bis zu der gegenüberliegenden Rillenwand 9 bzw. 10 erstreckt und diese mit der Erhebung 11 verbindet und somit anbindet.

### Bezugszeichenliste

### (Teil der Beschreibung)

| | |
|---|---|
| 1 | Umfangsrippe |
| 2 | Umfangsrippe |
| 3 | Umfangsrippe |
| 4 | Umfangsrippe |
| 5 | Umfangsrille |
| 6 | Umfangsrille |
| 7 | Umfangsrille |
| 8 | Rillengrund |
| 9 | Rillenwand |
| 10 | Rillenwand |
| 11 | Erhebung der Rillenwand |
| 12 | Seitenfläche |
| 13 | Seitenfläche |
| 14 | Stegförmige Erhebung |
| 15 | Radial innerer Erstreckungsbereich |
| 16 | Radial äußerer Erstreckungsbereich |
| 17 | Umfangsrippe |
| 18 | Umfangsrille |

## Patentansprüche

1. Laufstreifenprofil eines Fahrzeugreifens - insbesondere Fahrzeugluftreifens - mit radial erhabenen durch Rillen (5,6,7) von einander beabstandeten Profilelementen (1,2,3,4), wobei die Rillen (5,6,7) in radialer Richtung R nach innen durch ihren Rillengrund (8) und beiderseits des Rillengrundes (8) jeweils durch eine Rillenwand (9),10), die sich in radialer Richtung aus dem Rillengrund (8) nach außen bis zu der die Bodenkontaktoberfläche bildenden Mantelfläche erstreckt, begrenzt sind, wobei wenigstens eine Rille (5) über den Umfang des Fahrzeugreifens erstreckt ausgebildet ist, bei der zumindest in einer Rillenwand (9,10) über den Umfang verteilt und beabstandet zu einander jeweils in radialer Richtung R ausgehend vom Rillengrund (8) nach radial außen erstreckte, in Richtung senkrecht zur Rillenwand (9.10) in die Rille (5) hinein erstreckte Erhebungen (11) der Rillenwand (9,10) ausgebildet sind, und
wobei jeweils ausgehend von einer Erhebung (11) der einen Rillenwand (10) im Rillengrund (8)wenigstens eine stegförmige Erhebung (14) des Rillengrundes (8) ausgebildet ist, die sich quer zur Erstreckungsrichtung des Rillengrundes (8) bis zur anderen Rillenwand (9)erstreckt und die andere Rillenwand (9) im radial inneren Erstreckungsbereich der Rille (5) an die in der einen Rillenwand (10) ausgebildete Erhebung (11) anbindet,
**dadurch gekennzeichnet,**
**dass** die Erhebung (14) der Rillenwand eine pyramidenähnliche Form - insbesondere die Form eines Tetraeders oder einer Pyramide mit viereckiger oder fünfeckigen Grundfläche - aufweist, bei der die Grundfläche der pyramidenähnlichen Form im Rillengrund (8) und die Spitze (S) der pyramidenähnlichen Form in der Rillenwand (10) ausgebildet ist, und bei der eine Seitenfläche der pyramidenähnlichen Form Teil der Rillenwand (10) ist und die anderen Seitenflächen (12,13,19,20) der pyramidenähnlichen Form die zur Rille (5) hin die Erhebung (11) begrenzenden Flächen bilden.

2. Laufstreifenprofil gemäß den Merkmalen von Anspruch **1,**
wobei die stegförmige Erhebung (14) des Rillengrundes (8) sich ausgehend von einer außerhalb der Rillenwand (10) in der Rille (5) ausgebildeten Ecke (T) der Grundfläche der pyramidenähnlichen Form der Erhebung (11) der Rillenwand (10) bis zur anderen Rillenwand (9) erstreckt.

3. Laufstreifenprofil gemäß den Merkmalen von Anspruch **1,**
wobei die stegförmige Erhebung (14) des Rillengrundes (8) sich ausgehend von einer der anderen Seitenflächen(12), die die Erhebung (11) der Rillenwand (10) zur Rille (5) hin begrenzen, bis zur anderen Rillenwand (9) erstreckt.

4. Laufstreifenprofil gemäß den Merkmalen von Anspruch **2,**
wobei von zwei anderen Seitenflächen (12,13), die die Erhebung (11) zur Rille (5) hin begrenzen, jeweils eine stegförmige Erhebung (14) des Rillengrundes (8) bis zur anderen Rillenwand (9) erstreckt ausgebildet sind.

5. Laufstreifenprofil eines Fahrzeugreifens - insbesondere Fahrzeugluftreifens - mit radial erhabenen durch Rillen (5,6,7) von einander beabstandeten Profilelementen (1,2,3,4), wobei die Rillen (5,6,7) in radialer Richtung R nach innen durch ihren Rillengrund (8) und beiderseits des Rillengrundes (8) jeweils durch eine Rillenwand (9),10), die sich in radialer Richtung aus dem Rillengrund (8) nach außen bis zu der die Bodenkontaktoberfläche bildenden Mantelfläche erstreckt, begrenzt sind, wobei wenigstens eine Rille (5) über den Umfang des Fahrzeugreifens erstreckt ausgebildet ist, bei der zumindest in einer Rillenwand (9,10) über den Umfang verteilt und beabstandet zu einander jeweils in radialer Richtung R ausgehend vom Rillengrund (8) nach radial außen erstreckte, in Richtung senkrecht zur Rillenwand (9.10) in die Rille (5) hinein erstreckte Erhebungen (11) der Rillenwand (9,10) ausgebildet sind, und
wobei jeweils ausgehend von einer Erhebung (11) der einen Rillenwand (10) im Rillengrund (8)wenigstens eine stegförmige Erhebung (14) des Rillengrundes (8) ausgebildet ist, die sich quer zur Erstreckungsrichtung des Rillengrundes (8) bis zur anderen Rillenwand (9)erstreckt und die andere Rillenwand (9) im radial inneren Erstreckungsbereich der Rille (5) an die in der einen Rillenwand (10) ausgebildete Erhebung (11) anbindet,
**dadurch gekennzeichnet,**
**dass** die Erhebung (11) der Rillenwand (10) eine kegelsegmentähnliche Form aufweist, bei der die Grundfläche des Kegelsegments im Rillengrund (8) ausgebildet ist.

6. Laufstreifenprofil gemäß den Merkmalen von einem der vorangegangenen Ansprüche,
wobei die stegförmige Erhebung (14) in ihrer Erstreckung durch die Rille (5) geradlinig verlaufend unter Einschluss eines Winkels α zur Erstreckungsrichtung der Rille (5) mit 45°≤ α ≤ 135° ausgebildet ist.

7. Laufstreifenprofil gemäß den Merkmalen von einem der vorangegangenen Ansprüche,
wobei der Steg (14) mit einer Stegbreite b mit (0,1c) ≤ b≤ (0,5c) ausgebildet ist, wobei c das Maß der maximalen Längenerstreckung der Erhebung (11) der Rillenwand (10) in Erstreckungsrichtung der Rille (5) gemessen im Rillengrund (8) darstellt.

8. Laufstreifenprofil gemäß den Merkmalen von einem der vorangegangenen Ansprüche,
wobei der Steg (14) mit einer in radialer Richtung R aus dem Rillengrund (8) gemessenen Steghöhe h mit (0,05 P_{T}) ≤ h ≤ (0,5 P_{T}) ausgebildet ist, wobei P_{T} das Maß der in radialer Richtung R gemessenen maximalen Profiltiefe der Rille (5) darstellt.

9. Laufstreifenprofil gemäß den Merkmalen von einem der vorangegangenen Ansprüche,
bei der die den Steg (14) nach radial außen begrenzende Kontur über die Rille (5) hinweg geradlinig ausgebildet ist,
bei der der Übergang zwischen der die den Steg (14) nach radial außen begrenzende Kontur und der Erhebung (11) der Rillenwand (10) mit einem Krümmungsradius R_{K} um einen auf der von Steg (14) und Erhebung (11) der Rillenwand (10) zur Rille (5) hinweisenden Seite liegenden Krümmungsmittelpunkt M mit R_{K} ≤ h abgerundet gekrümmt ausgebildet ist.

## Claims

1. Tread profile of a vehicle tyre - in particular pneumatic vehicle tyre - having radially raised profile elements (1, 2, 3, 4) spaced apart from one another by channels (5, 6, 7), wherein the channels (5, 6, 7) are delimited in the inward radial direction R by their channel base (8) and at both sides of the channel base (8) in each case by a channel wall (9, 10) which extends in the outward radial direction from the channel base (8) to the outside surface which forms the ground contact patch, wherein at least one channel (5) is formed so as to extend over the circumference of the vehicle tyre, in which channel, at least in one channel wall (9, 10), there are formed elevations (11) of the channel wall (9, 10) which are distributed over the circumference and spaced apart from one another and which extend radially outward in each case in a radial direction R proceeding from the channel base (8) and extend into the channel (5) in a direction perpendicular to the channel wall (9, 10), and
wherein, proceeding in each case from an elevation (11) of the one channel wall (10), there is formed in the channel base (8) at least one ridge-like elevation (14) of the channel base (8), which elevation extends transversely with respect to the direction of extent of the channel base (8) to the other channel wall (9) and connects the other channel wall (9) in the radially inner region of extent of the channel (5) to the elevation (11) formed in the one channel wall (10), **characterized in that**
the elevation (14) of the channel wall has a pyramid-like shape - in particular the shape of a tetrahedron or a pyramid with a square or pentagonal base surface - in which the base surface of the pyramid-like shape is formed in the channel base (8) and the tip (S) of the pyramid-like shape is formed in the channel wall (10), and in which a side surface of the pyramid-like shape is part of the channel wall (10) and the other side surfaces (12, 13, 19, 20) of the pyramid-like shape form the surfaces which delimit the elevation (11) in the direction of the channel (5).

2. Tread profile according to the features of Claim 1,
wherein the ridge-like elevation (14) of the channel base (8) extends from a corner (T), which is formed outside the channel wall (10) in the channel (5), of the base surface of the pyramid-like shape of the elevation (11) of the channel wall (10) to the other channel wall (9).

3. Tread profile according to the features of Claim 1,
wherein the ridge-like elevation (14) of the channel base (8) extends from one of the other side surfaces (12) which delimit the elevation (11) of the channel wall (10) in the direction of the channel (5) to the other channel wall (9).

4. Tread profile according to the features of Claim 2,
wherein in each case one ridge-like elevation (14) of the channel base (8) is formed so as to extend from two other side surfaces (12, 13) which delimit the elevation (11) in the direction of the channel (5) to the other channel wall (9).

5. Tread profile of the vehicle tyre - in particular pneumatic vehicle tyre - having radially raised profile elements (1, 2, 3, 4) spaced apart from one another by channels (5, 6, 7), wherein the channels (5, 6, 7) are delimited in the inward radial direction R by their channel base (8) and at both sides of the channel base (8) in each case by a channel wall (9, 10) which extends in the outward radial direction from the channel base (8) to the outside surface which forms the ground contact patch, wherein at least one channel (5) is formed so as to extend over the circumference of the vehicle tyre, in which channel, at least in one channel wall (9, 10), there are formed elevations (11) of the channel wall (9, 10) which are distributed over the circumference and spaced apart from one another and which extend radially outward in each case in a radial direction R proceeding from the channel base (8) and extend into the channel (5) in a direction perpendicular to the channel wall (9, 10), and
wherein, proceeding in each case from an elevation (11) of the one channel wall (10), there is formed in the channel base (8) at least one ridge-like elevation (14) of the channel base (8), which elevation extends transversely with respect to the direction of extent of the channel base (8) to the other channel wall (9) and connects the other channel wall (9) in the radially inner region of extent of the channel (5) to the elevation (11) formed in the one channel wall (10), **characterized in that**
the elevation (11) of the channel wall (10) has a conical-segment-shaped form in which the base surface of the conical segment is formed in the channel base (8).

6. Tread profile according to the features of one of the preceding claims,
wherein the ridge-like elevation (14) is formed so as to run rectilinearly in terms of its extent through the channel (5) so as to enclose an angle α with respect to the direction of extent of the channel (5), where 45° ≤ α≤ 135°.

7. Tread profile according to the features of one of the preceding claims,
wherein the ridge (14) is formed with a ridge width b where (0.1cm b ≤ (0.5c), where c represents the dimension of the maximum longitudinal extent of the elevation (11) of the channel wall (10) in the direction of extent of the channel (5) measured on the channel base (8).

8. Tread profile according to the features of one of the preceding claims,
wherein the ridge (14) is formed with a ridge height h measured in the radial direction R from the channel base (8) where (0.05 P_{T}) ≤ h ≤ (0.5 P_{T}), wherein P_{T} represents the maximum profile depth of the channel (5) measured in the radial direction R.

9. Tread profile according to the features of one of the preceding claims,
in which the contour which delimits the ridge (14) in the radially outward direction is formed rectilinearly across the channel (5),
in which the transition between the contour which delimits the ridge (14) in the radially outward direction and the elevation (11) of the channel wall (10) is of rounded, curved form with a radius of curvature R_{K} about a curvature central point M situated on the side pointing from the ridge (14) and elevation (11) of the channel wall (10) towards the channel (5), where R_{K} ≤ h.

## Revendications

1. Profil de bande de roulement d'un bandage de véhicule, en particulier d'un pneu de véhicule, comprenant des éléments profilés (1, 2, 3, 4) rehaussés radialement, espacés les uns des autres par des rainures (5, 6, 7), les rainures (5, 6, 7) étant limitées dans la direction radiale R vers l'intérieur et par leur fond de rainure (8) et des deux côtés du fond de rainure (8) à chaque fois par une paroi de rainure (9, 10), qui s'étend dans la direction radiale depuis le fond de rainure (8) vers l'extérieur jusqu'à la surface d'enveloppe formant la surface en contact avec le sol, au moins une rainure (5) étant réalisée de manière à s'étendre sur la périphérie du bandage de véhicule, des rehaussements (11) de la paroi de rainure (9, 10) répartis sur la périphérie et espacés les uns des autres, à chaque fois s'étendant radialement vers l'extérieur dans la direction radiale R à partir de la base de rainure (8), s'étendant dans la rainure (5) dans la direction perpendiculaire à la paroi de rainure (9, 10), étant réalisés au moins dans une paroi de rainure (9, 10), et au moins un rehaussement (14) en forme de nervure du fond de rainure (8) étant réalisé à chaque fois à partir d'un rehaussement (11) de l'une des parois de rainure (10) dans le fond de rainure (8), ledit rehaussement (14) s'étendant transversalement à la direction d'étendue du fond de rainure (8) jusqu'à l'autre paroi de rainure (9) et reliant l'autre paroi de rainure (9) dans la région d'étendue radialement interne de la rainure (5) au rehaussement (11) réalisé dans l'une des parois de rainure (10), **caractérisé en ce que**
le rehaussement (14) de la paroi de rainure présente une forme de type pyramidal - en particulier la forme d'un tétraèdre ou d'une pyramide ayant une base quadrilatérale ou pentagonale - la base de la forme de type pyramidal étant réalisée dans le fond de rainure (8) et la pointe (S) de la forme de type pyramidal étant réalisée dans la paroi de rainure (10), et une face latérale de la forme de type pyramidal formant une partie de la paroi de rainure (10) et les autres faces latérales (12, 13, 19, 20) de la forme de type pyramidal formant les faces limitant le rehaussement (11) vers la rainure (5).

2. Profil de bande de roulement selon les caractéristiques de la revendication 1,
dans lequel le rehaussement (14) en forme de nervure du fond de rainure (8) s'étend à partir d'un coin (T) de la base de la forme de type pyramidal du rehaussement (11) de la paroi de rainure (10) réalisé à l'extérieur de la paroi de rainure (10) dans la rainure (5) jusqu'à l'autre paroi de rainure (9).

3. Profil de bande de roulement selon les caractéristiques de la revendication 1,
dans lequel le rehaussement (14) en forme de nervure du fond de rainure (8) s'étend depuis l'une des autres faces latérales (12) qui limitent le rehaussement (11) de la paroi de rainure (10) vers la rainure (5), jusqu'à l'autre paroi de rainure (9).

4. Profil de bande de roulement selon les caractéristiques de la revendication 2,
dans lequel un rehaussement (14) en forme de nervure du fond de rainure (8) s'étend à chaque fois jusqu'à l'autre paroi de rainure (9) depuis deux autres faces latérales (12, 13) qui limitent le rehaussement (11) vers la rainure (5).

5. Profil de bande de roulement d'un bandage de véhicule, en particulier d'un pneu de véhicule, comprenant des éléments profilés (1, 2, 3, 4) rehaussés radialement, espacés les uns des autres par des rainures (5, 6, 7), les rainures (5, 6, 7) étant limitées dans la direction radiale R vers l'intérieur et par leur fond de rainure (8) et des deux côtés du fond de rainure (8) à chaque fois par une paroi de rainure (9, 10), qui s'étend dans la direction radiale depuis le fond de rainure (8) vers l'extérieur jusqu'à la surface d'enveloppe formant la surface en contact avec le sol, au moins une rainure (5) étant réalisée de manière à s'étendre sur la périphérie du bandage de véhicule, des rehaussements (11) de la paroi de rainure (9, 10) répartis sur la périphérie et espacés les uns des autres, à chaque fois s'étendant radialement vers l'extérieur dans la direction radiale R à partir de la base de rainure (8), s'étendant dans la rainure (5) dans la direction perpendiculaire à la paroi de rainure (9, 10), étant réalisés au moins dans une paroi de rainure (9, 10), et au moins un rehaussement (14) en forme de nervure du fond de rainure (8) étant réalisé à chaque fois à partir d'un rehaussement (11) de l'une des parois de rainure (10) dans le fond de rainure (8), ledit rehaussement (14) s'étendant transversalement à la direction d'étendue du fond de rainure (8) jusqu'à l'autre paroi de rainure (9) et reliant l'autre paroi de rainure (9) dans la région d'étendue radialement interne de la rainure (5) au rehaussement (11) réalisé dans l'une des parois de rainure (10), **caractérisé en ce que**
le rehaussement (11) de la paroi de rainure (10) présente une forme de type segment de cône, la base du segment de cône étant réalisée dans le fond de rainure (8).

6. Profil de bande de roulement selon les caractéristiques de l'une quelconque des revendications précédentes,
dans lequel le rehaussement (14) en forme de nervure est réalisé en ligne droite dans son étendue à travers la rainure (5) en formant un angle α avec la direction d'étendue de la rainure (5), avec 45° ≤ α ≤ 135°.

7. Profil de bande de roulement selon les caractéristiques de l'une quelconque des revendications précédentes,
dans lequel la nervure (14) est réalisée avec une largeur de nervure b avec (0,1c) ≤ b ≤ (0,5c), c étant la dimension de l'étendue en longueur maximale du rehaussement (11) de la paroi de rainure (10) dans la direction d'étendue de la rainure (5), mesurée au fond de rainure (8).

8. Profil de bande de roulement selon les caractéristiques de l'une quelconque des revendications précédentes,
dans lequel la nervure (14) est réalisée avec une hauteur de nervure h mesurée dans la direction radiale R depuis le fond de rainure (8) avec (0,05 P_{T}) ≤ h ≤ (0,5 P_{T}), P_{T} étant la dimension de la profondeur de profil maximale de la rainure (5) mesurée dans la direction radiale R.

9. Profil de bande de roulement selon les caractéristiques de l'une quelconque des revendications précédentes,
dans lequel le contour limitant la nervure (14) radialement vers l'extérieur est réalisé en ligne droite au-delà de la rainure (5),
la transition entre le contour limitant la rainure (14) radialement vers l'extérieur et le rehaussement (11) de la paroi de rainure (10) étant réalisée sous forme courbe arrondie avec un rayon de courbure R_{K} autour d'un centre de courbure M situé du côté tourné vers la rainure (5) depuis la nervure (14) et le rehaussement (11) de la paroi de rainure (10), avec R_{K} ≤ h.
